# EUROPEAN PATENT APPLICATION

(11) **EP 3 889 404 A1**
(43) Date of publication of application: **06.10.2021**
(21) Application number: 20275069.1
(22) Date of filing: 30.03.2020
(51) Int. Cl.: F01N 3/10, B01D 53/94, B01J 23/63, B01J 37/02, B01J 35/00, B01J 35/04, B01J 23/00, B01J 23/10, B01J 37/12, B01J 37/08, B01J 37/04, B01J 35/02

(54) **MULTI-REGION TWC CATALYSTS FOR GASOLINE ENGINE EXHAUST GAS TREATMENTS WITH IMPROVED H2S ATTENUATION**

(71) Applicant: Johnson Matthey Public Limited Company, London EC4A 4AB (GB)
(72) Inventor: ARMITAGE, Andrew, Royston, Hertfordshire SG8 5HE (GB); POWELL, Alexis, Royston, Hertfordshire SG8 5HE (GB)
(74) Representative: Wilson, Nicola Ann

(57) **Abstract**

A catalyst article for treating exhaust gas comprising: a substrate comprising an inlet end, an outlet end with an axial length L; a first catalytic region beginning at the inlet end and extending for less than the axial length L, wherein the first catalytic region comprises a first PGM component and a first inorganic oxide; a second catalytic region beginning at the outlet end, wherein the second catalytic region comprises a second PGM component, a second oxygen storage capacity (OSC) material, and a second inorganic oxide; wherein the first catalytic region is substantially free of ceria; and wherein the first PGM component is palladium (Pd), platinum (Pt) or a combination thereof.

## Description

### FIELD OF THE INVENTION

The present invention relates to a catalyzed article useful in treating exhaust gas emissions from gasoline engines.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalytic conversion catalysts, are widely utilized to reduce the amount of these pollutants emitted to atmosphere. A commonly used catalyst for gasoline engine exhaust treatments is the TWC (three way catalyst). TWCs perform three main functions: (1) oxidation of CO; (2) oxidation of unburnt HCs; and (3) reduction of NOₓ.

H₂S attenuation is an additional feature that can be introduced into a standard TWC. Typically, additives such as Mn and Ni have historically been used to attenuate H₂S emissions however Mn has been shown to be detrimental to the primary performance of a three-way catalyst and Ni is not a viable option in many geographical areas due to its associated toxicity. This invention negates the need to use additives with detrimental effects while reducing H₂S emissions.

### SUMMARY OF THE INVENTION

One aspect of the present disclosure is directed to a catalyst for treating gasoline engine exhaust gas comprising: a substrate comprising an inlet end, an outlet end with an axial length L; a first catalytic region beginning at the inlet end and extending for less than the axial length L, wherein the first catalytic region comprises a first PGM component and a first inorganic oxide; a second catalytic region beginning at the outlet end, wherein the second catalytic region comprises a second PGM component, a second oxygen storage capacity (OSC) material, and a second inorganic oxide; wherein the first catalytic region is substantially free of ceria; and wherein the first PGM component is palladium (Pd), platinum (Pt) or a combination thereof.

The invention also encompasses an exhaust system for internal combustion engines that comprises the three-way catalyst component of the invention.

The invention also encompasses treating an exhaust gas from an internal combustion engine, in particular for treating exhaust gas from a gasoline engine. The method comprises contacting the exhaust gas with the three-way catalyst component of the invention.

### BRIEF DESCRIPTION OF THE DRAWINGS

**FIG. 1a** depicts a first configuration in which first catalytic region extends from the inlet end, second catalytic region extends from the outlet end; and total length of the second catalytic region and the first catalytic region equals to the axial length L.
**FIG. 1b** depicts a variation of **FIG. 1a****,** in which first catalytic region extends from the inlet end, second catalytic region extends for 100% of the axial length L.
**FIG. 2a** depicts a second configuration in which first catalytic region extends from the inlet end, second catalytic region extends from the outlet end, and third catalytic region extends from the outlet end.
**FIG. 2b** depicts a variation of **FIG. 2a****,** in which first catalytic region extends from the inlet end, second catalytic region extends for 100% of the axial length L, and third catalytic region extends for 100% of the axial length L.
**FIG. 3a** depicts a third configuration in which second catalytic region extends from the outlet end; third catalytic region extends from the inlet end; and first catalytic region extends from the inlet end, at least partially covers the third catalytic region.
**FIG. 3b** depicts a variation of **FIG. 3a****,** in which second catalytic region extends from the outlet end; third catalytic region extends from the outlet end; and first catalytic region extends from the inlet end.
**FIG. 4a** depicts a fourth configuration in which second catalytic region extends for 100% of the axial length L, first catalytic region extends from the inlet end and partially covers the second catalytic region, and fourth catalytic region extends from the outlet end, partially covers the second catalytic region.
**FIG. 4b** depicts a variation of **FIG. 4a****,** in which second and third catalytic regions both extend for 100% of the axial length L, first catalytic region extends from the inlet end and partially covers the third catalytic region, and fourth catalytic region extends from the outlet end, partially covers the third catalytic region.

### DETAILED DESCRIPTION OF THE INVENTION

The present invention is directed to the catalytic treatment of combustion exhaust gas, such as that produced by gasoline and other engines, and to related catalysts and systems. More specifically, the inventors have discovered that by incorporating the first catalytic region into TWC formulations, the catalyst articles according to the present invention demonstrated improved H₂S attenuation.

One aspect of the present disclosure is directed to a catalyst for treating gasoline engine exhaust gas comprising: a substrate comprising an inlet end, an outlet end with an axial length L; a first catalytic region beginning at the inlet end and extending for less than the axial length L, wherein the first catalytic region comprises a first PGM component and a first inorganic oxide; a second catalytic region beginning at the outlet end, wherein the second catalytic region comprises a second PGM component, a second oxygen storage capacity (OSC) material, and a second inorganic oxide; wherein the first catalytic region is substantially free of ceria; and wherein the first PGM component is palladium (Pd), platinum (Pt) or a combination thereof.

The inventors have surprisingly found that these catalysts in this way of coating show better catalyst performance that is not achieved using the catalyst separately or in conventional ways of coating.

### First Catalytic Region

The first catalytic region can extend for 1 to 50 percent of the axial length L. Preferably, the first catalytic region can extend for 10 to 40 percent, more preferably, 25 to 35 percent of the axial length L.

Preferably, the first PGM component is Pd. The first catalytic region can comprise 0.1-150 g/ft³; preferably, 10-100 g/ft³; more preferably, 20-60 g/ft³ of Pd.

The total washcoat loading of the first catalyst region can be 0.5 - 2.5 g/in³; preferably 0.8 - 2.0 g/in³.

The first catalytic region can be essentially free of ceria or does not comprise ceria.

The first inorganic oxide is preferably an oxide of Groups 2, 3, 4, 5, 13 and 14 elements. The first inorganic oxide is preferably selected from the group consisting of alumina, magnesia, silica, zirconia, barium oxides, and mixed oxides or composite oxides thereof. Particularly preferably, the first inorganic oxide is alumina, lanthanum-alumina, or a magnesia/alumina composite oxide. One especially preferred first inorganic oxide is alumina or lanthanum-alumina composite oxides.

The first catalytic region can further comprise a first alkali or alkaline earth metal component.

The first alkali or alkaline earth metal is preferably barium and/or strontium, and mixed oxides or composite oxides thereof. Preferably the barium or strontium, where present, is loaded in an amount of 0.1 to 15 wt%, and more preferably 3 to 10 wt%, based on the total weight of the first catalytic region.

It is even more preferable that the first alkali or alkaline earth metal is barium. The barium, where present, is preferably loaded in an amount of 0.1 to 15 wt%, and more preferably 3 to 10 wt%, based on the total weight of the first catalytic region.

It is also preferable that the first alkali or alkaline earth metal is mixed oxides or composite oxide of barium and strontium. Preferably, the mixed oxides or composite oxide of barium and strontium is present in an amount of 0.1 to 15 wt%, and more preferably 3 to 10 wt%, based on the total weight of the first catalytic region. It is more preferable that the first alkali or alkaline earth metal is composite oxide of barium and strontium.

Preferably the barium or the strontium is present as BaCO₃ or SrCO₃. Such a material can be performed by any method known in the art, for example incipient wetness impregnation or spray-drying.

The first catalytic region may further comprise manganese, neodymium or calcium. Preferably, where present, manganese, neodymium or calcium is loaded in an amount of 0.1 to 15 wt%, and more preferably 1 - 10 wt %.

In some embodiments, the first catalyst region may further comprise Ba and Sr, Ba and Mn, Ba and Nd, or Ba and Ca. In further embodiments, the first catalyst region may further comprise Ba and Sr, Ba and Mn, or Ba and Nd.

### Second Catalytic Region

The second catalytic region can extend for 50 to 100 percent of the axial length L. Preferably, the second catalytic region can extend for 60 to 100 percent, more preferably, 70 to 100 percent of the axial length L.

The second PGM component can be Pd, Pt, Rh, or a combination thereof. In some embodiments, the second PGM component is Pd, Rh, or Pd and Rh.

The second OSC material is preferably selected from the group consisting of cerium oxide, a ceria-zirconia mixed oxide, and an alumina-ceria-zirconia mixed oxide. More preferably, the second OSC material comprises the ceria-zirconia mixed oxide. In addition, the second OSC material may further comprise one or more of dopants like lanthanum, neodymium, praseodymium, yttrium *etc.* The ceria-zirconia mixed oxide can have a molar ratio of zirconia to ceria at least 50:50, preferably, higher than 60:40, more preferably, higher than 80:20.

The second OSC material (e.g., ceria-zirconia mixed oxide) can be from 10 to 90 wt%, preferably, 25-75 wt%, more preferably, 30-60 wt%, based on the total washcoat loading of the second catalytic region.

The second inorganic oxide is preferably an oxide of Groups 2, 3, 4, 5, 13 and 14 elements. The second inorganic oxide is preferably selected from the group consisting of alumina, magnesia, silica, ceria, barium oxides, and mixed oxides or composite oxides thereof. Particularly preferably, the second inorganic oxide is alumina, lanthanum-alumina, ceria, or a magnesia/alumina composite oxide. One especially preferred second inorganic oxide is alumina or lanthanum-alumina composite oxides.

The second OSC material and the second inorganic oxide can have a weight ratio of no greater than 10:1, preferably, no greater than 8:1 or 5:1, more preferably, no greater than 4:1 or 3:1, most preferably, no greater than 2:1.

Alternatively, the second OSC material and the second inorganic oxide can have a weight ratio of 10:1 to 1:10, preferably, 8:1 to 1:8 or 5:1 to 1:5; more preferably, 4:1 to 1:4 or 3:1 to 1:3; and most preferably, 2:1 to 1:2.

The second OSC material loading in the second catalytic region can be less than 1.5 g/in³. In some embodiments, the second OSC material loading in the second catalytic region is no greater than 1.2 g/in³, 1.0 g/in³, 0.9 g/in³, 0.8 g/in³, or 0.7 g/in³.

The total washcoat loading of the second catalyst region can be less than 3.5 g/in³, preferably, less than 3.0 g/in³, 2.5 g/in³, or 1.5 g/in³.

The second catalytic region can further comprise a second alkali or alkaline earth metal component.

The second alkali or alkaline earth metal is preferably barium, strontium, mixed oxides or composite oxides thereof. Preferably the barium or strontium, where present, is in an amount of 0.1 to 15 wt%, and more preferably 3 to 10 wt% of barium or strontium, based on the total weight of the second catalytic region.

It is even more preferable that the second alkali or alkaline earth metal is strontium. The strontium, where present, is preferably present in an amount of 0.1 to 15 wt%, and more preferably 3 to 10 wt%, based on the total weight of the second catalytic region.

It is also preferable that the second alkali or alkaline earth metal is mixed oxides or composite oxide of barium and strontium. Preferably, the mixed oxides or composite oxide of barium and strontium is present in an amount of 0.1 to 15 wt%, and more preferably 3 to 10 wt%, based on the total weight of the second catalytic region. It is more preferable that the second alkali or alkaline earth metal is composite oxide of barium and strontium.

Preferably the barium or strontium is present as BaCO₃ or SrCO₃. Such a material can be performed by any method known in the art, for example incipient wetness impregnation or spray-drying.

### Third Catalytic Region

The catalyst article may further comprise a third catalytic region. The third catalytic region can extend for 50 to 100 percent of the axial length L. Preferably, the third catalytic region can extend for 60 to 100 percent, more preferably, 70 to 100 percent of the axial length L.

The third catalytic region can comprise a third PGM component. The third PGM component can be selected from the group consisting of platinum, palladium, rhodium, and a mixture thereof. In some embodiments, the third PGM component is Pd, Rh, or Pd and Rh.

The third catalytic region can further comprise a third OSC material, a third alkali or alkaline earth metal component and/or a third inorganic oxide.

The third OSC material is preferably selected from the group consisting of cerium oxide, a ceria-zirconia mixed oxide, and an alumina-ceria-zirconia mixed oxide. Preferably the third OSC material comprises ceria-zirconium mixed oxide, with one or more of dopants of lanthanum, neodymium, yttrium, praseodymium, *etc.* In addition, the third OSC material may function as a support material for the third rhodium component.

The ceria-zirconia mixed oxide can have a molar ratio of zirconia to ceria at least 50:50; preferably, higher than 60:40; and more preferably, higher than 80:20.

The third OSC material can be from 10 to 90 wt%; preferably, 25-75 wt%; more preferably, 35-65 wt %; based on the total washcoat loading of the third catalytic region.

The third OSC material loading in the third catalytic region can be less than 2 g/in³. In some embodiments, the third OSC material loading in the third catalytic region is no greater than 1.5 g/in³, 1.2 g/in³, 1.0 g/in³, or 0.5 g/in³.

The third inorganic oxide is preferably an oxide of Groups 2, 3, 4, 5, 13 and 14 elements. The third inorganic oxide is preferably selected from the group consisting of alumina, ceria, magnesia, silica, lanthanum, zirconium, neodymium, praseodymium oxides, and mixed oxides or composite oxides thereof. Particularly preferably, the third inorganic oxide is alumina, a lanthanum/alumina composite oxide, or a zirconium/alumina composite oxide. One especially preferred third inorganic oxide is a lanthanum/alumina composite oxide or a zirconium/alumina composite oxide.

Preferred the third inorganic oxides preferably have a fresh surface area of greater than 80 m²/g, pore volumes in the range 0.1 to 4 mL/g. High surface area inorganic oxides having a surface area greater than 100 m²/g are particularly preferred, e.g. high surface area alumina. Other preferred the third inorganic oxides include lanthanum/alumina composite oxides, optionally further comprising a zirconium-containing component, e.g. zirconia. In such cases the zirconium may be present on the surface of the lanthanum/alumina composite oxide, e.g. as a coating.

The third OSC material and the third inorganic oxide can have a weight ratio of at least 1:1, preferably, at least 2:1, more preferably, at least 3:1.

Alternatively, the third OSC material and the third inorganic oxide can have a weight ratio of 10:1 to 1:10; preferably, 8:1 to 1:8 or 5:1 to 1:5; more preferably, 4:1 to 1:4 or 3:1 to 1:3.

The total washcoat loading of the third catalyst region can be less than 3.5 g/in³; preferably, less than 3.0 g/in³ or 2 g/in³; more preferably, less than 1.5 g/in³ or 1.0 g/in³.

### Fourth Catalytic Region

The catalyst article may further comprise a fourth catalytic region beginning at the outlet end and extending for less than the axial length L, wherein the fourth catalytic region comprises a fourth PGM component and a fourth inorganic oxide; wherein the fourth catalytic region is substantially free of ceria; and wherein the fourth PGM component is palladium (Pd), platinum (Pt) or a combination thereof.

The fourth catalytic region can extend for 1 to 50 percent of the axial length L. Preferably, the fourth catalytic region can extend for 10 to 40 percent, more preferably, 25 to 35 percent of the axial length L.

Preferably, the fourth PGM component is Pd. The fourth catalytic region can comprise 0.1-150 g/ft³; preferably, 10-100 g/ft³; more preferably, 20-60 g/ft³ of Pd.

The total washcoat loading of the fourth catalyst region can be 0.5 - 2.5 g/in³; preferably 0.8 - 2.0 g/in³.

The fourth catalytic region can be essentially free of ceria, or does not comprise ceria.

The fourth inorganic oxide is preferably an oxide of Groups 2, 3, 4, 5, 13 and 14 elements. The fourth inorganic oxide is preferably selected from the group consisting of alumina, magnesia, silica, zirconia, barium oxides, and mixed oxides or composite oxides thereof. Particularly preferably, the fourth inorganic oxide is alumina, lanthanum-alumina, or a magnesia/alumina composite oxide. One especially preferred fourth inorganic oxide is alumina or lanthanum-alumina composite oxides.

The fourth catalytic region can further comprise a fourth alkali or alkaline earth metal component.

The fourth alkali or alkaline earth metal is preferably barium and/or strontium, and mixed oxides or composite oxides thereof. Preferably the barium or strontium, where present, is loaded in an amount of 0.1 to 15 wt%, and more preferably 3 to 10 wt% of barium or strontium, based on the total weight of the fourth catalytic region.

It is even more preferable that the fourth alkali or alkaline earth metal is barium. The barium, where present, is preferably loaded in an amount of 0.1 to 15 wt%, and more preferably 3 to 10 wt%, based on the total weight of the fourth catalytic region.

It is also preferable that the fourth alkali or alkaline earth metal is mixed oxides or composite oxide of barium and strontium. Preferably, the mixed oxides or composite oxide of barium and strontium is present in an amount of 0.1 to 15 wt%, and more preferably 3 to 10 wt%, based on the total weight of the fourth catalytic region. It is more preferable that the first alkali or alkaline earth metal is composite oxide of barium and strontium.

Preferably the barium or the strontium is present as BaCO₃ or SrCO₃. Such a material can be performed by any method known in the art, for example incipient wetness impregnation or spray-drying.

The first catalytic region may further comprise manganese, neodymium or calcium. Preferably, where present, manganese, neodymium or calcium is loaded in an amount of 0.1 to 15 wt%, and more preferably 1 - 10 wt %.

In some embodiments, the first catalyst region may further comprise Ba and Sr, Ba and Mn, Ba and Nd, or Ba and Ca. In further embodiments, the first catalyst region may further comprise Ba and Sr, Ba and Mn, or Ba and Nd.

The catalyst article of the invention may comprise further components that are known to the skilled person. For example, the compositions of the invention may further comprise at least one binder and/or at least one surfactant. Where a binder is present, dispersible alumina binders are preferred.

### Configurations of First, Second, Third and/or Fourth Catalytic Regions

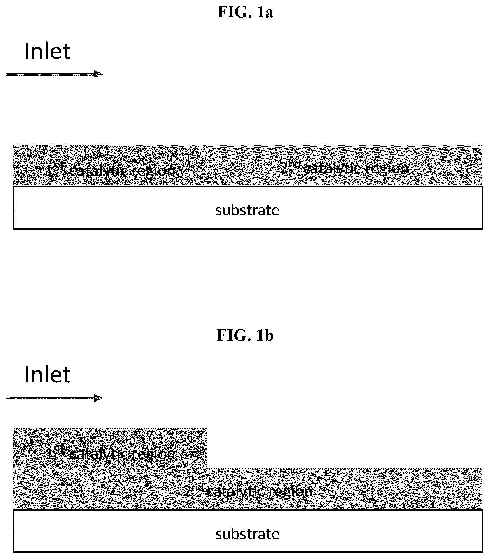

The second catalytic region can overlap with the first catalytic region for 1 to 50 percent of the axial length L (*e.g., see* **FIG. 1b****,** **FIG. 2b****,** **FIG. 3a****,** **FIG. 4a,** and **FIG. 4b**). Alternatively, the total length of the second catalytic region and the first catalytic region can equal to the axial length L. In yet another alternative, the total length of the second catalytic region and the first catalytic region can be less than the axial length L, for example, no greater than 95%, 90%, 80%, or 70% of the axial length L.

In one aspect of the invention, various configurations of catalytic articles comprising the first, second, third and/or fourth catalytic regions can be prepared as below.

**FIG. 1a** depicts a first configuration in which first catalytic region extends from the inlet end, second catalytic region extends from the outlet end; and total length of the second catalytic region and the first catalytic region equals to the axial length L.

In the first configuration, preferably, the first, catalytic region can extend for 5 to 50 percent or 10 to 50 percent of the axial length L; more preferably, 20 to 50 percent of the axial length L; and even more preferably, 25 to 40 percent of the axial length L.

**FIG. 1b** depicts a variation of the first configuration, in which first catalytic region extends from the inlet end, second catalytic region extends for 100% of the axial length L.

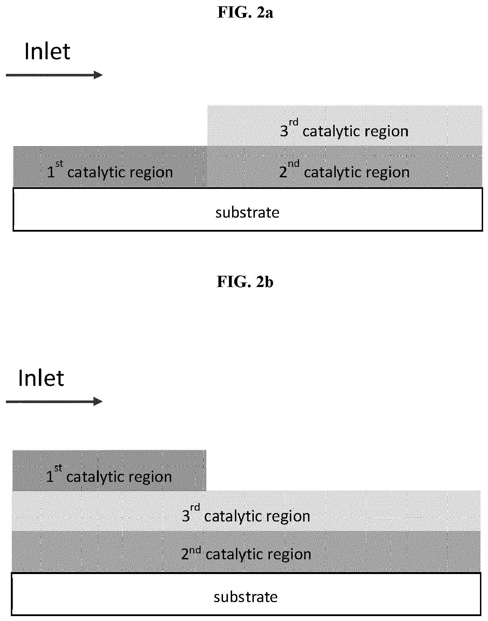

**FIG. 2a** depicts a second configuration in which first catalytic region extends from the inlet end, second catalytic region extends from the outlet end, and third catalytic region extends from the outlet end.

In some embodiments, there is no overlap between first catalytic region and second/third catalytic regions. In other embodiments, there can be up to 30% overlap.

**FIG. 2b** depicts a variation of the second configuration, in which first catalytic region extends from the inlet end, second catalytic region extends for 100% of the axial length L, and third catalytic region extends for 100% of the axial length L.

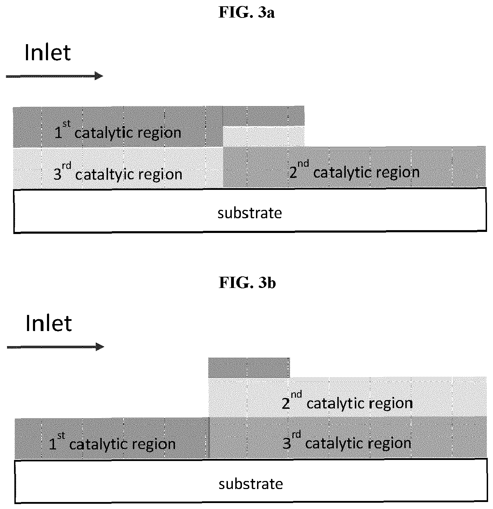

**FIG. 3a** depicts a third configuration in which second catalytic region extends from the outlet end; third catalytic region extends from the inlet end; and first catalytic region extends from the inlet end, at least partially covers the third catalytic region.

**FIG. 3b** depicts a variation of the third configuration, in which second catalytic region extends from the outlet end; third catalytic region extends from the outlet end; and first catalytic region extends from the inlet end.

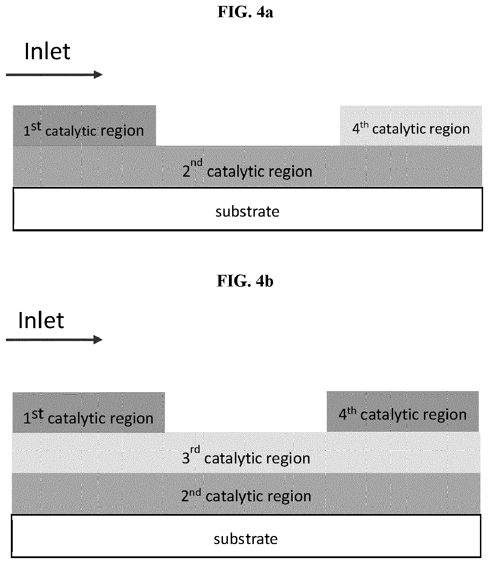

**FIG. 4a** depicts a fourth configuration in which second catalytic region extends for 100% of the axial length L, first catalytic region extends from the inlet end and partially covers the second catalytic region, and fourth catalytic region extends from the outlet end, partially covers the second catalytic region

**FIG. 4b** depicts a variation of the fourth configuration, in which second and third catalytic regions both extend for 100% of the axial length L, first catalytic region extends from the inlet end and partially covers the third catalytic region, and fourth catalytic region extends from the outlet end, partially covers the third catalytic region.

### Substrate

The substrate is preferably a flow-through monolith substrate, which has a first face and a second face defining a longitudinal direction there between. The flow-through monolith substrate has a plurality of channels extending between the first face and the second face. The plurality of channels extends in the longitudinal direction and provide a plurality of inner surfaces (e.g. the surfaces of the walls defining each channel). Each of the plurality of channels has an opening at the first face and an opening at the second face. For the avoidance of doubt, the flow-through monolith substrate is not a wall flow filter.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is from 600 to 700 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

In some embodiments, the first catalytic region can be supported/deposited directly on the substrate. In certain embodiments, the second catalytic region can be supported/deposited directly on the substrate. In other embodiments, the third catalytic region is supported/deposited directly on the substrate.

Another aspect of the present disclosure is directed to a method for treating a vehicular exhaust gas containing NOₓ, CO, and HC using the catalyst article described herein. Catalytic converters equipped with the TWC made according to this method show improved performance in H₂S attenuation.

Another aspect of the present disclosure is directed to a system for treating vehicular exhaust gas comprising the catalyst article described herein in conjunction with a conduit for transferring the exhaust gas through the system.

### DEFINITIONS

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10%, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (e.g. region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (i.e. a substantially uniform length) of at least 5% (e.g. ≥ 5 %) of the total length of the substrate.

The total length of a substrate is the distance between its inlet end and its outlet end (e.g. the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.
Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The expression "consist essentially" as used herein limits the scope of a feature to include the specified materials or steps, and any other materials or steps that do not materially affect the basic characteristics of that feature, such as for example minor impurities. The expression "consist essentially of" embraces the expression "consisting of".

The expression "substantially free of" as used herein with reference to a material, typically in the context of the content of a region, a layer or a zone, means that the material in a minor amount, such as ≤ 5 % by weight, preferably ≤ 2 % by weight, more preferably ≤ 1 % by weight. The expression "substantially free of" embraces the expression "does not comprise."

The expression "essentially free of" as used herein with reference to a material, typically in the context of the content of a region, a layer or a zone, means that the material in a trace amount, such as ≤ 1 % by weight, preferably ≤ 0.5 % by weight, more preferably ≤ 0.1 % by weight. The expression "essentially free of" embraces the expression "does not comprise."

Any reference to an amount of dopant, particularly a total amount, expressed as a % by weight as used herein refers to the weight of the support material or the refractory metal oxide thereof.

The term "loading" as used herein refers to a measurement in units of g/ft³ on a metal weight basis.

The following examples merely illustrate the invention. Those skilled in the art will recognize many variations that are within the spirit of the invention and scope of the claims.

The following listing of specific Embodiments is intended to complement, rather than displace or supersede, the previous descriptions.
Embodiment 1: A catalyst article for treating exhaust gas comprising:
   a substrate comprising an inlet end, an outlet end with an axial length L;
   a first catalytic region beginning at the inlet end and extending for less than the axial length L, wherein the first catalytic region comprises a first PGM component and a first inorganic oxide;
   a second catalytic region beginning at the outlet end, wherein the second catalytic region comprises a second PGM component, a second oxygen storage capacity (OSC) material, and a second inorganic oxide;
   wherein the first catalytic region is substantially free of ceria; and
   wherein the first PGM component is palladium (Pd), platinum (Pt) or a combination thereof.
Embodiment 2: The catalyst article of Embodiment 1, wherein the first catalytic region extends for 1 to 50 percent of the axial length L.
Embodiment 3: The catalyst article of Embodiment 1 or Embodiment 2, wherein the second catalytic region extends for 50 to 100 percent of the axial length L.
Embodiment 4: The catalyst article of any one of Embodiments 1-3, wherein the second catalytic region overlaps with the first catalytic region for 1 to 50 percent of the axial length L.
Embodiment 5: The catalyst article of any one of Embodiments 1-3, wherein the total length of the second catalytic region and the first catalytic region equals to the axial length L.
Embodiment 6: The catalyst article of any one of Embodiments 1-3, wherein the total length of the second catalytic region and the first catalytic region is less than the axial length L.
Embodiment 7: The catalyst article of any one of Embodiments 1-6, wherein the first PGM component is Pd.
Embodiment 8: The catalyst article of Embodiment 7, wherein the first catalytic region comprises 0.1-150 g/ft³ of palladium.
Embodiment 9: The catalyst article of any one of Embodiments 1-8, wherein the first catalytic region is essentially free of ceria.
Embodiment 10: The catalyst article of any one of Embodiments 1-9, wherein the first inorganic oxide is selected from the group consisting of alumina, zirconia, magnesia, silica, lanthanum, neodymium, praseodymium, yttrium oxides, and mixed oxides or composite oxides thereof.
Embodiment 11: The catalyst article of Embodiment 10, wherein the first inorganic oxide is alumina, a lanthana/alumina composite oxide, or a magnesia/alumina composite oxide.
Embodiment 12: The catalyst article of any one of Embodiments 1-11, wherein the second PGM is Pd, Pt, Rh, or a combination thereof.
Embodiment 13: The catalyst article of any one of Embodiments 1-12, wherein the second OSC material is selected from the group consisting of cerium oxide, a ceria-zirconia mixed oxide, and an alumina-ceria-zirconia mixed oxide.
Embodiment 14: The catalyst article of Embodiment 13, wherein the second OSC material comprises the ceria-zirconia mixed oxide.
Embodiment 15: The catalyst article of any one of Embodiments 1-14, wherein the second inorganic oxide is selected from the group consisting of alumina, zirconia, magnesia, silica, lanthanum, neodymium, praseodymium, yttrium oxides, and mixed oxides or composite oxides thereof.
Embodiment 16: The catalyst article of Embodiment 15, wherein the second inorganic oxide is alumina, a lanthana/alumina composite oxide, or a magnesia/alumina composite oxide.
Embodiment 17: The catalyst article of any one of Embodiments 1-16, further comprising a third catalytic region.
Embodiment 18: The catalytic article of Embodiment 17, wherein the third catalytic region comprises a third PGM component.
Embodiment 19: The catalytic article of Embodiment 18, wherein the third PGM component is selected from the group consisting of platinum, palladium, rhodium, and a mixture thereof.
Embodiment 20: The catalytic article of any one of Embodiments 17-19, wherein the third catalytic region further comprises a third OSC material.
Embodiment 21: The catalytic article of Embodiment 20, wherein the third OSC material is selected from the group consisting of cerium oxide, zirconium oxide, a ceria-zirconia mixed oxide, and an alumina-ceria-zirconia mixed oxide.
Embodiment 22: The catalytic article of any one of Embodiments 17-21, further comprising a third inorganic oxide.
Embodiment 23: The catalytic article of Embodiment 22, wherein the third inorganic oxide is selected from the group consisting of alumina, magnesia, silica, zirconia, lanthanum, cerium, neodymium, praseodymium, yttrium oxides, and mixed oxides or composite oxides thereof. Embodiment 24: The catalytic article of any one of Embodiments 17-23, wherein the third catalytic region extends for the axial length L.
Embodiment 25: The catalytic article of any one of Embodiments 17-23, wherein the third catalytic region extends for less than the axial length L.
Embodiment 26: The catalytic article of any one of Embodiments 1-25 further comprising a fourth catalytic region beginning at the outlet end and extending for less than the axial length L, wherein the fourth catalytic region comprises a fourth PGM component and a fourth inorganic oxide; wherein the fourth catalytic region is substantially free of ceria; and wherein the fourth PGM component is palladium (Pd), platinum (Pt) or a combination thereof.
Embodiment 27: The catalyst article of any one of Embodiments 1-26, wherein the substrate is a flow-through monolith.
Embodiment 28: The catalyst article of any one of Embodiments 1-27, wherein the first catalytic region is supported/deposited directly on the substrate.
Embodiment 29: The catalyst article of any one of Embodiments 1-28, wherein the second catalytic region is supported/deposited directly on the substrate.
Embodiment 30: The catalyst article of any one of Embodiments 1-29, wherein 100% of the first catalytic region is not covered by the second catalytic region and/or the third catalytic region.
Embodiment 31: An emission treatment system for treating a flow of a combustion exhaust gas comprising the catalyst article of any one of Embodiments 1-30.
Embodiment 32: A method of treating an exhaust gas from an internal combustion engine comprising contacting the exhaust gas with the catalyst article of any one of Embodiments 1-31.

### EXAMPLES

### Materials

All materials are commercially available and were obtained from known suppliers, unless noted otherwise.

### Comparative Catalyst A

Comparative Catalyst A is a commercial three-way (Pd-Rh) catalyst with a single layer structure. The washcoat consists of Pd and Rh supported on a CeZr mixed oxide, La-stabilized alumina, and Ba promotor. The washcoat loading was about 3.0 g/in³ with a Pd loading of 27 g/ft³, a Rh loading of 3 g/ft³ and a Ba loading of 250 g/ft³. This washcoat was coated from the inlet and outlet face of a ceramic substrate (400 cpsi, 4 mil wall thickness) using standard coating procedures with coating depth targeted of 50% of the substrate length, dried at 90 °C and calcined at 500 °C for 45 mins.

The washcoat has a ceria loading of 0.68 g/in³.

### Comparative Catalyst B

Comparative Catalyst B was prepared according to the similar procedure as Comparative Catalyst A with the exception that it also contained 75 g/ft³ Mn.

### Catalyst C

### First Catalytic Region:

The first catalytic region consists of Pd supported on a washcoat of a first La-stabilized alumina, and a Ba and Sr promotor. The washcoat loading of the first catalytic region was about 1.7 g/in³ with a 27 g/ft³ of Pd loading, a Ba loading of 400g/ft³, and a Sr loading of 250 g/ft³.

This washcoat was coated from the inlet face of the ceramic substrate containing the first catalytic region from above, using standard coating procedures with coating depth targeted of 30% of the substrate length, dried at 90 °C.

### Second Catalytic Region:

The second catalytic region consists of Pd and Rh supported on a washcoat of a CeZr mixed oxide, La-stabilized alumina, and Ba promotor. The washcoat loading of the second catalytic region was about 3.0 g/in³ with a Pd loading of 27 g/ft³, a Rh loading of 3 g/ft³, and a Ba loading of 250 g/ft³.

This washcoat was coated from the outlet face of a ceramic substrate (400 cpsi, 4 mil wall thickness) using standard coating procedures with coating depth targeted of 70% of the substrate length, dried at 90 °C and calcined at 500 °C for 45 mins.

### Catalyst D

Catalyst D was prepared according to the similar procedure as Catalyst C with the exception that the second catalytic region was coated with coating depth targeted at 100% of the substrate. (*E.g., see* **FIG. 1b**). And the coating order is the second catalytic region followed by the first catalytic region.

### Catalyst E

### First Catalytic Region:

The first catalytic region consists of Pd supported on a washcoat of a first La-stabilized alumina, and a Ba and Sr promotor. The washcoat loading of the first catalytic region was about 0.85 g/in³ with a 27 g/ft³ of Pd loading, a Ba loading of 400g/ft³, and a Sr loading of 250 g/ft³.

This washcoat was coated from the inlet face of the ceramic substrate containing the first catalytic region from above, using standard coating procedures with coating depth targeted of 30% of the substrate length, dried at 90 °C.

### Second Catalytic Region:

The second catalytic region consists of Pd and Rh supported on a washcoat of a CeZr mixed oxide, a second La-stabilized alumina, and Ba promotor. The washcoat loading of the second catalytic region was about 3.0 g/in³ with a Pd loading of 27 g/ft³, a Rh loading of 3 g/ft³, and a Ba loading of 250 g/ft³.

This washcoat was coated from the outlet face of a ceramic substrate (400 cpsi, 4 mil wall thickness) using standard coating procedures with coating depth targeted of 100% of the substrate length, dried at 90 °C and calcined at 500 °C for 45 mins.

### Fourth Catalytic Region:

The fourth catalytic region consists of Pd supported on a washcoat of a fourth La-stabilized alumina, and a Ba and Sr promotor. The washcoat loading of the fourth catalytic region was about 0.85 g/in³ with a 27 g/ft³ of Pd loading, a Ba loading of 400g/ft³, and a Sr loading of 250 g/ft³.

The coating order is the second catalytic region, the first catalytic region, then the fourth catalytic region.

### EXAMPLE 1: H₂S ATTENUATION

Core samples were taken from each of Comparative Catalysts A and B and Catalysts C-E.

Catalytic activities were determined using a synthetic gas bench test. The cores were tested in a simulated catalyst activity testing (SCAT) gas apparatus using the inlet gas mixtures in Table 1. The test consisted of five cycles of the conditions stated below, at a space velocity (SV) of 50,000 h⁻¹. The average of the peak emissions during the desulphurization step from cycles 2 -5 was recorded (Table 2).

The cores were pre-conditioned at 500 °C. The test started with a poisoning step (gas mix 1), the cores were then heated to 650 °C (gas mix 2) where desulphurization took place (gas mix 3). The cores were then cooled under N₂ to 500 °C.

**Table 1 Gas mix compositions**

| **Gas Mix** | **1** | **2** | **3** |
|---|---|---|---|
| **CO₂ (%)** | 14 | 14 | 14 |
| **H₂O (%)** | 10 | 10 | 10 |
| **O₂ (%)** | 1.3 | 1.3 | 0 |
| **NOx** (**ppm**) | 0 | 0 | 0 |
| **CH₃H₆ (ppmC)** | 1000 | 1000 | 1000 |
| **CH₃H₈ (ppmC)** | 500 | 500 | 500 |
| **CO (%)** | 0.3 | 0.3 | 1.05 |
| **H₂ (%)** | 0.1 | 0.1 | 0.35 |
| **SO₂ (ppm)** | 25 | 0 | 0 |

**Table 2 H₂S Attenuation Results**

| **Sample** | **Average Peak H₂S [ppm]** |
|---|---|
| **Comparative Catalyst A** | 273 |
| **Comparative Catalyst B** | 182 |
| **Catalyst C** | 28 |
| **Catalyst D** | 49 |
| **Catalyst E** | 99 |

As shown **Table 2** above, Catalysts C-E of the present invention present significantly improved H₂S attenuation when compared with Comparative Catalysts A and B.

## Claims

1. A catalyst article for treating exhaust gas comprising:
a substrate comprising an inlet end, an outlet end with an axial length L;
a first catalytic region beginning at the inlet end and extending for less than the axial length L, wherein the first catalytic region comprises a first PGM component and a first inorganic oxide;
a second catalytic region beginning at the outlet end, wherein the second catalytic region comprises a second PGM component, a second oxygen storage capacity (OSC) material, and a second inorganic oxide;
wherein the first catalytic region is substantially free of ceria; and
wherein the first PGM component is palladium (Pd), platinum (Pt) or a combination thereof.

2. The catalyst article of claim 1, wherein the first catalytic region extends for 1 to 50 percent of the axial length L.

3. The catalyst article of claim 1 or claim 2, wherein the second catalytic region extends for 50 to 100 percent of the axial length L.

4. The catalyst article of any one of claims 1-3, wherein the total length of the second catalytic region and the first catalytic region equals to the axial length L.

5. The catalyst article of any one of claims 1-3, wherein the total length of the second catalytic region and the first catalytic region is less than the axial length L.

6. The catalyst article of any one of the preceding claims, wherein the first PGM component is Pd.

7. The catalyst article of claim 6, wherein the first catalytic region comprises 0.1-150 g/ft³ of palladium.

8. The catalyst article of any one of the preceding claims, wherein the first inorganic oxide is selected from the group consisting of alumina, zirconia, magnesia, silica, lanthanum, neodymium, praseodymium, yttrium oxides, and mixed oxides or composite oxides thereof.

9. The catalyst article of any one of the preceding claims, wherein the second PGM is Pd, Pt, Rh, or a combination thereof.

10. The catalyst article of any one of the preceding claims, wherein the second OSC material is selected from the group consisting of cerium oxide, a ceria-zirconia mixed oxide, and an alumina-ceria-zirconia mixed oxide.

11. The catalyst article of any one of the preceding claims, wherein the second inorganic oxide is selected from the group consisting of alumina, zirconia, magnesia, silica, lanthanum, neodymium, praseodymium, yttrium oxides, and mixed oxides or composite oxides thereof.

12. The catalyst article of any one of the preceding claims, further comprising a third catalytic region.

13. The catalytic article of any one of the preceding claims further comprising a fourth catalytic region beginning at the outlet end and extending for less than the axial length L, wherein the fourth catalytic region comprises a fourth PGM component and a fourth inorganic oxide; wherein the fourth catalytic region is substantially free of ceria; and wherein the fourth PGM component is palladium (Pd), platinum (Pt) or a combination thereof.

14. The catalyst article of any one of the preceding claims, wherein 100% of the first catalytic region is not covered by the second catalytic region and/or the third catalytic region.

15. An emission treatment system for treating a flow of a combustion exhaust gas comprising the catalyst article of any one of claims 1-14.
